# EUROPEAN PATENT SPECIFICATION

(11) **EP 1 385 278 B1**
(45) Date of publication and mention of the grant of the patent: **04.10.2006**
(21) Application number: 02360220.4
(22) Date of filing: 22.07.2002
(51) Int. Cl.: H04B 10/08, H04B 10/00, H04B 10/207, H04J 14/02

(54) **Adjustment of optical characteristics in WDM systems**
Einstellung optischer Charakteristik in Wellenlängen-Multiplex-Systemen
Réglage de caractéristiques optiques dans des systèmes de multiplexage de longueurs d'ondes

(43) Date of publication of application: 28.01.2004
(73) Proprietor: ALCATEL, 75008 Paris (FR)
(72) Inventor: Löhr, Jürgen, 70372 Stuttgart (DE); Schabernack, Jörg, 71665 Vaihingen/Enz (DE); Beisel, Werner, 71638 Ludwigsburg (DE); Jäkel, Hans-Jörg, Dr., 70439 Stuttgart (DE); Hägele, Volker, Dr., 71384 Schorndorf (DE)
(74) Representative: Urlichs, Stefan

(56) References cited:
- EP-A- 0 543 570
- US-A- 5 790 289
- US-A- 5 801 860
- US-A- 5 923 453

## Description

### Field of the Invention

The present invention relates to the field of telecommunications and more particularly to the control and adjustment of parameters which define characteristics of optical components in an optical wavelength-division-multiplex (WDM) transmission system.

### Background of the Invention

Optical transmission systems use wavelength division multiplexing (WDM) to transport a number of client signals (also termed tributary signals) over a common physical medium such as an optical fiber link. Each tributary signal is assigned a separate wavelength within the spectral band of the multiplex signal. A WDM-based transmission system known as OTN (optical transport network) is defined in ITU-T G.709 (02/2001). OTN allows resource management in a WDM transmission network.

The optical transmitter and wavelength multiplexer, which forms the multiplex signal, contain optical components such as lasers for each wavelength. The requirements on the precision of these components are relatively high. On the other hand, aging and other effects like temperature variations may influence the optical characteristics of such components. Therefore, certain parameters which define the characteristics of optical components in a WDM systems may require adjustment from time to time.

The basis of the adjustment are measurements on the receive side of a WDM link. Corrective measures are determined from the measurements according to an algorithm. Collection of measurements, execution of the algorithm and adjustment of the parameters in the transmitter must be done manually by an operator. This implies many activities for the human operator as the adjustment algorithm is typically complex and iterative, and is prone to errors. The result of errors can be transmission hits, thus degraded service by the operator.

US 5,801,860 describes a wavelength division multiplexing transmission system, which includes a transmitting element and a receiving element. The receiving element has a power level detecting unit, which detects received light power levels of demultiplexed light signals and sends the light power level signals over a feedback section back to the transmitting element. The latter contains a power control unit which is responsive to the input light power level signals to control its light sources to change controllable original light power levels of original light signals so that the demultiplexed light signals have the received light power levels each of which becomes a predetermined light power level.

US 5,923,453 describes an optical power measuring circuit for measuring optical power distributions of a signal light propagating on the optical fiber transmission line and another signal light led to the optical fiber transmission line from another optical fiber transmission line.

EP 0 543 570 A2 mentions that due to the nonuniform wavelength-dependent gain profile and saturation characteristic of erbium-doped fiber amplifiers, each channel of a wavelength-multiplexed system will experience a different optical gain which, in turn, can result in an excessive bit-error-rate performance in some channels. An optical transmission system equalizer is described there, which selectively equalizes the optical gain or the optical signal-to-noise rations of the channels of a wavelength-multiplexed optical transmission system.

The adjustment is however more complex if the transmitters, which must be adjusted, and receivers, which perform the measurements, are not located within the same WDM system, i.e. within a transponder, but in other network elements such as optical cross-connects. In this case, the measurements, the algorithm, and the adjustments are distributed over several network elements.

### Summary of the Invention

Accordingly, a need has arisen for a method and associated network element and control system which allows simplified control and adjustment of parameters which define characteristics of optical components in an optical wavelength-division-multiplex (WDM) transmission system, in the case transmitters and receivers are located outside the WDM system.

These and other objects which appear below are achieved by a method according to claim 1, a network element according to claim 2 and a control system according to claim 3.

According to the invention, predefined characteristics of a received signal are measured at a receiver side. The results of these measurements are communicated to a remote control system which determines therefrom corrective adjustment parameters according to a predetermined algorithm. The corrective parameters are then communicated from the remote control system to the transmitter side, which adjusts the optical components accordingly.

The present invention provides the technical advantages that adjustment is faster once a problem is recognized, that the risk of errors is reduced, that the adjustment does not depend on the availability of operator personnel but is always running, only depending on the availability of the remote control system.

The adjustment algorithm is implemented in one of the affected network elements (NEs) or in the related network management system (NMS), preferably in the element manager of the affected NEs. The measurements are provided automatically to the algorithm; the related adjustments are provided automatically to the NEs, which contain the transmitters to be adjusted. It is thus more likely to react on problems in time to avoid traffic impact.

### Brief Description of the Drawings

A preferred embodiment of the present invention will now be described with reference to the accompanying drawings in which:
- figure 1: shows the principle of controlling parameters of optical components in a transmit side WDM system ;
- figure 2: shows adjustment of optical components in a transmit side WDM multiplexer based on measurements taken in a receive side WDM multiplexer similar to the method known from US 5,801,860;
- figure 3: shows an I/O port of the multiplexers in figure 2; and
- figure 4: shows adjustment of optical components located outside the WDM network according to the invention.

### Detailed Description of the Invention

A WDM multiplex signal is composed of n (e.g. 64) single wavelength signals assigned within a predefined spectral band. Each single wavelength is generated by a dedicated laser, which is therefore termed colored laser. While it would be desirable to have lasers which can be tuned to any wavelength with in the spectral band so that each laser would be freely configurable within the entire band, for technical and economical reasons this is not possible today. Colored lasers exist which can emit one predefined wavelength within the band. Other more advanced lasers can be configured to any of a set of up to four predefined wavelengths. This imposes some restrictions on the wavelengths a particular tributary signal can use on its way through the network.

Anyway, each laser must be tunable at least around its dedicated or configured wavelength to ensure that the compound multiplex signal can be properly generated and transmitted, as due to aging and other long-term influences, the center wavelength can shift away from the nominal value and would thus overlap into the adjacent wavelength channel. Adjustment of optical properties of a laser is in principle known and can for example be achieved by applying appropriate bias voltage to control the optical length of the laser cavity.

Other optical components that may require adjustment include for example transmitter side wavelength filters, optical gratings, and modulators.
Therefore, a number of parameters of the transmitted wavelengths have to be adjusted. These parameters depend e.g. on the number of wavelengths transmitted and the aging of the optical components.

In case adjustments have to be done, potentially all transmitters of wavelengths are involved in the adjustments, not only the wavelength which measurements indicated that an adjustment is required. The algorithm which determines the required adjustments has the measurements as inputs and the transmitter parameters as output. In the preferred embodiment, the algorithms for the adjustment are completely independent for both directions of the WDM system. However, it would also be possible that the algorithms for the two directions depend on each other.

The actual implementation of an adjustment algorithm depends on the type and design of the components to be tuned. It can be derived from stored empirical data, from theoretical considerations or it can be an iterative algorithm designed to drive a deviation of the measured data from a nominal value to zero or any combination of the aforementioned. The algorithm is implemented in the form of a software program stored on a storage and run on one or more processors of the control system that hosts the algorithm. It would be apparent to those skilled in the art how to realize the algorithm in a particular implementation without undue experimentation.

One of the affected NEs or NMSs is chosen to execute the adjustment algorithm. The receive-end NEs provide the measurement data via their external or via internal management interfaces to the NE/NMS hosting the algorithm. Similarly, the NE/NMS hosting the algorithm uses official or internal management interfaces of the NEs containing the transmitters to execute the adjustments.

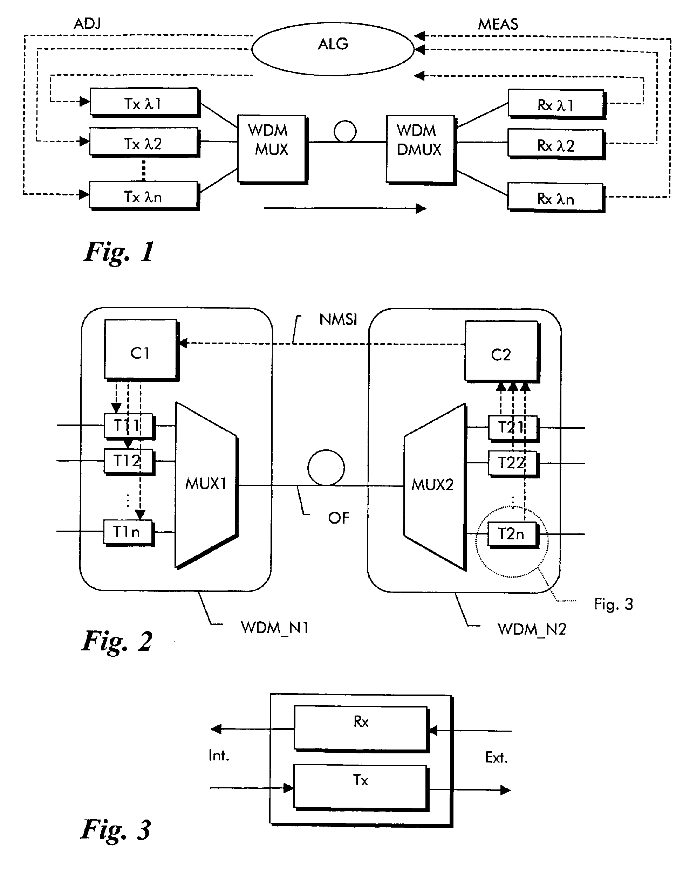

The principle of controlling parameters of optical components in a transmit side WDM system is shown schematically in figure 1. While optical transmission systems operate in principle bi-directionally, for the sake of simplicity, only one direction is shown, indicated by an arrow from left to right As mentioned above, adjustment is in the preferred embodiment completely independent for the two directions of transmission.

A number of n transmitters Tx λ1- Tx λn generate single wavelength signals 1-n at dedicated wavelengths, respectively. An optical multiplexer WDM_MUX combines the n single wavelength signals to form a multiplexed signal, which is then transmitted over an optical fiber link to a wavelength demultiplexer WDM-DMUX. The demultiplexer splits the multiplexed signal into its constituent wavelengths and feeds the single wavelength signals to corresponding receivers Rx λ1 - Rx λn.

Each of the receivers Rx λ1 - Rx λn measures predefined characteristics of its received single wavelength optical signal and communicates the measurement data MEAS to a remote control system that hosts the adjustment algorithm ALG. The control system determines corrective adjustments in the case that the measurements indicate that adjustment would be necessary and communicates the adjustments ADJ to the transmitters Tx λ1 - Tx λn, which tune their optical components accordingly.

A WDM system similar to the one described in US 5,801,860 is shown in figure 2 as an example that simplifies understanding of the invention. Two WDM network elements WDM_N1/N2 are connected via an optical fiber link OF. Each of the network elements contains a number of n transceiver (transmitter/receiver combinations) T11-T1n, T21-T2n for generating and receiving a single wavelength optical signal. The transceivers are connected to a wavelength multiplexer MUX1, MUX2, respectively, which generates in transmit direction from the colored single wavelength signals generated by the transceivers a multiplex signal and which splits in receive direction a received multiplex signal into its constituent wavelengths and feeds the single wavelength signals to the associated transceivers.

Figure 3 shows in more detail the design of the transceivers - often also termed transponders - from figure 2. Each transceiver consists of a receiver Rx and a transmitter Tx. From the external side, the transceiver receives a non-colored optical signal (also known as "black-and-white signal") and generates a colored single wavelength optical signal at its dedicated or configured wavelength. In the reverse direction, the transceiver receives from the internal side a single wavelength optical signal extracted by multiplexer MUX1, MUX2 from the received multiplex signal, and generates therefrom on the external side a non-colored optical signal for output of the WDM system.

For the sake of simplicity, only transmit direction from left to right will be considered. However, the operation of the WDM system is in reality bi-directional.

WDM_N1 transmits the wavelength-multiplexed signal over fiber link OF to WDM_N2. The transceivers T21-T2n measure characteristics of the respective received single wavelength signals. The results of the measurements are fed to a local control system C2. C2 communicates the measurements over a network management channel NMS1 back to WDM_N1. The management channel can be implemented as a dedicated overhead channel in band with the multiplex signal. A local control system of WDM_N1 receives the measurements and calculates adjustments if necessary. When adjustment becomes necessary, local control system C2 controls the optical components of transmitters T11-T1n to tune them to their nominal values.

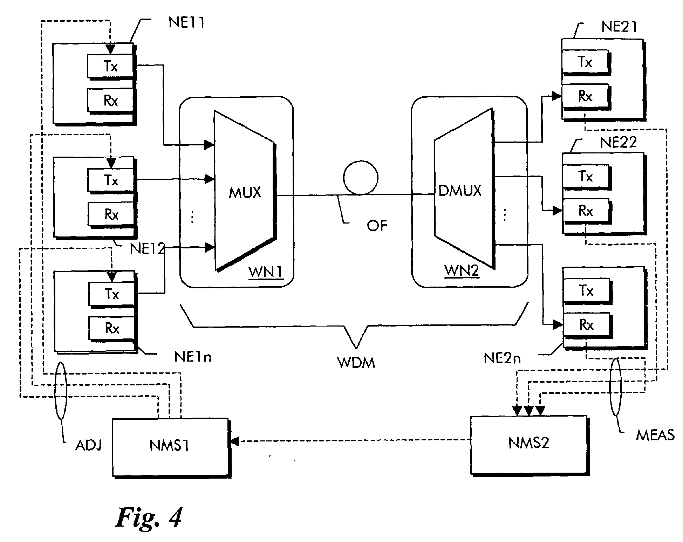

In this exemplary WDM system, the adjustment algorithm that determines adjustments is located in the local control system of the transmitting network element. However, this is only possible if the optical components that are involved in generating the single wavelength optical signals are located within the some WDM network element. An embodiment according to the invention is shown in figure 4, which considers a more advanced scenario where the transmitters are no longer located within one WDM system.

The WDM network WDM contains a first WDM network element WN1 connected over optical fiber link OF to a second WDM network element WN2. As in figures 1 and 2 before, only direction of transmission from left to right is shown while in reality the operation of the system is bi-directional.

Network element WN1 contains a WDM multiplexer MUX and network element WN2 contains a WDM demultiplexer DMUX. The network elements WN1, WN2 have, contrary to known network infrastructure as shown in Fig.2, interfaces for colored single wavelength signals rather than "black-and-white" interfaces. This imposes the restriction for client network elements that the tributary signals must already be colored signals at dedicated, previously assigned wavelengths.

The tributary interfaces on the left hand side of WN1 are connected to client network elements NE11-NE1n. The tributary interfaces of WN2 are connected to client network elements NE21-NE2n. The client network elements are for example optical crossconnects. These are only shown schematically with their relevant interfaces. Examples of such optical crossconnects for OTN are described in EP01217867, EP01217868, and EP01217869. An optical crossconnect typically has a number of optical interfaces connected to a switching matrix for switching connections from any to any interface.

It is important to understand that the client network elements are not part of the WDM system. Therefore, responsibility for the proper generation of the colored single wavelength signals required for WDM transmission lies outside the WDM system and its control. Control of the transmitter components is further complicated by the fact that - as mentioned above - adjustments may potentially affect all transmitters rather than only the one which measurements indicated that an adjustment is required.

According to an aspect of the invention, use is thus made of the network management system responsible for client network elements. In particular, the adjustment algorithm is hosted in the element manager NMS1 which controls the optical crossconnects NE11-NE1n. An element manager is typically a control device in a network that configures a number of network elements of the same type, keeps track of configuration records and monitors the network elements for any alarm messages that may occur during operation. The element controller communicates with the subordinate local controllers of the controlled network elements and with a superordinate regional manager.

The various receivers Rx in the right hand network elements NE21-NE2n measure certain characteristics of the single wavelength signals received from WN2 and communicate the measurement data to their superordinate network management system, element manager NMS2. NMS2 forwards the measurement data MEAS via an official network management channel to element manager NMS1 controlling network elements NE11-NE1n. NMS1 hosts the adjustment algorithm and determines from the measurement data corrective adjustments if necessary. The adjustments ADJ are then communicated to the corresponding network elements NE11-NE1n, which tune their optical components accordingly.

In the embodiment according to the invention, no transponders that convert non-colored input signals to dedicated single wavelength signals are required in the WDM system, but the "colored" transmitters are located outside the WDM system. Control of WDM parameters, i.e., of parameters of the constituent wavelengths of a WDM signal is allocated to a control system outside the WDM network itself. Apparently, the invention would be equally applicable to a mixed approach where some of the transponders and their associated transmitters are located inside the WDM network and some are located in external network elements that are not part of the WDM network.

## Claims

1. A method of controlling and adjusting parameters which define characteristics of optical components in network elements (NE11-NE1n) generating signals to be transmitted over an optical wavelength-division-multiplex transmission network (WDM), said method comprising the steps of
- providing a number of more than one transmit side network elements (NE11-NE1n), each network element having at least one colored interface, each interface generating a single wavelength tributary signal at a predefined mutually different wavelength;
- at the edge of said optical wavelength-division-multiplex transmission network (WDM), multiplexing said single wavelength tributary signals to form a wavelength-multiplexedtransmission signal using a transmit side wavelength multiplexer (MUX);
- transmitting said wavelength-multiplexed transmission signal through said wavelength-division-muttiplex transmission network (WDM) to a receive side demultiplexer (DMUX);
- at said demultiplexer (DMUX), splitting said received wavelength-multiplexed transmission signal into its constituent single wavelength tributary signals;
- forwarding said single wavelength tributary signals to a number of different receive side network elements (NE21-NE2n); at the various receive side network elements (NE21-NE2n), measuring predefined characteristics of said single wavelength tributary signals;
- communicating the measurement data (MEAS) from the receive side network elements (NE21-NE2n) to a remote control systems (NMS1) controlling said transmit side network elements (NE11-NE1n);
- determining at the remote control system (NMS1) adjustment parameters from said measurement data using a predefined algorithm (ALG);
- communicating the adjustments (ADJ) to the various transmit side network elements (NE11-NE1n); and
- tuning transmitters (Tx) in the colored interfaces of said transmit side network elements (NE11-NE1n) according to said adjustments.

2. A network element (NE11-NE1n, NE21-NE2n) connectable to an optical wavelength-division-multiplex transmission network (WDM) for the transmission of single wavelength tributary signals in the form of a wavelength-multiplexed signal, said network element comprising
- at least one transmitter (Tx) for generating a single wavelength tributary signal at a dedicated wavelength (λ1 -λn);
- at least one corresponding receiver (Rx) for receiving a reverse single wavelength tributary signals at the same wavelength;
- means for measuring predefined characteristics of said reverse single wavelength tributary signals and communicating measurement data (MEAS) to a remote control system (NMS1); and
- means for receiving adjustments (ADJ) from said remote control system and for tuning said transmitter (Tx) accordingly, said remote control system (NMS1) hosting an algorithm (ALG) for determining said adjustment parameters from measurement data provided by receive side network elements;
said network element being an optical crossconnect (N11-N1n, N21-N2n) not forming part of said wavelength-division-multiplex transmission network (WDM) and being connectable to a wavelength multiplexer (MUX) of said wavelength-division-multiplex transmission network via colored interfaces for dedicated single wavelengths.

3. A control system (NMS1, NMS2) for network elements (N 11-N1 n, N21-N2n) generating single wavelength tributary signals at dedicated wavelengths for transmission through an optical wavelength-division-multiplex transmission network (WDM) in the form of a wavelength-multiplexed signal, said control system comprising
- means for receiving measurement data (MEAS) from various first network elements (NE21-NE2n) performing measurements of predefined characteristics on received single wavelength tributary signals;
- a processor and associated storage storing in the form of a software program an algorithm (ALG) for determining adjustment parameters from said measurement data; and
- means for communicating said adjustment parameters (ADJ) to various second network elements (NE11-NE1n) generating said single wavelength tributary signals;
said control system being an element manager (NMS1, NMS2) for optical crossconnects (N11-N1n, N21-N2n) not forming part of said wavelength-division-multiplex transmission network (WDM).

## Patentansprüche

1. Verfahren zur Steuerung und Einstellung von Parametern, die Charakteristiken optischer Bauelemente in Netzwerkelementen (NE11-NE1n) definieren, die Signale erzeugen, die über ein optisches Übertragungs-Netzwerk mit Wellenlängen-Multiplex (WDM) zu senden sind, wobei das Verfahren folgende Schritte umfasst:
- Bereitstellung einer Anzahl von mehr als einem Netzwerkelement (NE11-NE1n) auf der Sendeseite, wobei jedes Netzwerkelement mindestens eine farbige Schnittstelle hat,
wobei jede Schnittstelle ein Zubringersignal mit einer einzigen Wellenlänge bei einer vordefinierten, gegenseitig unterschiedlichen Wellenlänge erzeugt;
- Am Rand des optischen Übertragungsnetzwerks mit Wellenlängen-Multiplex (WDM) Multiplexen der Zubringersignale mit einer einzigen Wellenlänge, um ein Übertragungssignal im Wellenlängen-Multiplex zu erzeugen, wozu ein Wellenlängen-Multiplexer (MUX) auf der Sendeseite verwendet wird;
- Übertragung des Übertragungssignals im Wellenlängen-Multiplex über das Übertragungs-Netzwerk mit Wellenlängen-Multiplex (WDM) zu einem Demultiplexer (DMUX) auf der Empfangsseite;
- An dem Demultiplexer (DMUX) Aufteilung des empfangenen Übertragungssignals im Wellenlängen-Multiplex in die zubringersignale mit einer einzigen Wellenlänge, aus denen es besteht;
- Weiterleitung der Zubringersignale mit einer einzigen Wellenlänge an eine Anzahl von verschiedenen Netzwerkelementen (NE21-NE2n) auf der Empfangsseite;
- In den verschiedenen Netzwerkelementen (NE21-NE2n) auf der Empfangsseite Messung vordefinierter Charakteristiken der Zubringersignale mit einer Wellenlänge;
- Übertragung der Messdaten (MEAS) von den Netzwerkelementen (NE21-NE2n) der Empfangsseite zu einem Fernsteuerungs-System (NMS1), das die Netzwerkelemente (NE11-NE1n) der Sendeseite steuert;
- In dem Fernsteuerungs-System (NMS1) Bestimmung von Einstellungs-Parametern aus den Messdaten unter Verwendung eines vordefinierten Algorithmus (ALG) ;
- übertragung der Einstellungen (ADJ) zu den verschiedenen Netzwerkelementen (NE11-NE1n) der Sendeseite; und
- Abstimmung der Sender (Tx) in den farbigen Schnittstellen der Netzwerkelemente (NE11-NE1n) der Sendeseite entsprechend der Einstellungen.

2. Ein Netzwerkelement (NE11-NE1n, NE21-NE2n), das an ein optisches Übertragungsnetzwerk mit Wellenlängen-Multiplex (WDM) angeschlossen werden kann, um Zubringersignale in Form eines Signals im Wellenlängen-Multiplex zu übertragen, wobei das Netzwerkelement folgendes umfasst:
- mindestens einen Sender (Tx) zur Erzeugung eines Zubringersignals mit einer Wellenlänge bei einer speziellen Wellenlänge (λ1-λn);
- mindestens einen entsprechenden Empfänger (Rx) zum Empfang eines Zubringersignals mit einer einzigen Wellenlänge in Gegenrichtung bei derselben Wellenlänge;
- Mittel zur Messung von vordefinierten Charakteristiken der Zubringersignale mit einer einzigen Wellenlänge in Gegenrichtung und zur Übertragung von Messdaten (MEAS) zu einem Fernsteuerungs-System (NMS1); und
- Mittel zum Empfang von Einstellungen (ADJ) von dem Fernsteuerungs-System und zur entsprechenden Abstimmung des Senders (Tx), wobei das Fernsteuerungs-System (NMS1) einen Algorithmus (ALG) enthält, um die Einstellungs-Parameter aus den Messdaten zu bestimmen, die von Netzwerkelementen auf der Empfangsseite geliefert werden;
wobei das Netzwerkelement ein optischer Crossconnect (N11-N1n, N21-N2n) ist, der nicht zum Übertragungsnetzwerk mit Wellenlängen-Multiplex (WDM) gehört und über farbige Schnittstellen für spezielle einzelne Wellenlängen an einen Wellenlängen-Multiplexer (MUX) des Übertragungsnetzwerks mit Wellenlängen-Multiplex angeschlossen werden kann.

3. Ein Steuerungssystem (NMS1, NMS2) für Netzwerkelemente (N11-N1n, N21-N2n), die Zubringersignale mit einer einzigen Wellenlänge bei speziellen Wellenlängen erzeugen, um sie in Form eines Signals mit Wellenlängen-Multiplex über ein optisches Übertragungsnetzwerk mit Wellenlängen-Multiplex (WDM) zu übertragen, wobei das Steuerungssystem folgendes umfasst:
- - Mittel zum Empfang von Messdaten (MEAS) von verschiedenen Netzwerkelementen (NE21-NE2n), die Messungen vordefinierter Charakteristiken an empfangenen Zubringersignalen mit einer einzigen Wellenlänge durchführen;
- Ein Prozessor und zugehöriger Speicher, der in Form eines Software-Programms einen Algorithmus (ALG) zur Bestimmung von Einstellungs-Parametern aus den Messdaten speichert; und
- Mittel zur Übertragung der Einstellungs-Parameter (ADJ) an verschiedene zweite Netzwerkelemente (NE11-NE1n), welche die Zubringersignale mit einer einzigen Wellenlänge erzeugen;
wobei das Steuerungssystem ein Element-Manager (NMS1, NMS2) für optische Crossconnects (N11-N1n, N21-N2n) ist, die nicht zu dem Übertragungsnetzwerk im Wellenlängen-Multiplex (WDM) gehören.

## Revendications

1. Un procédé de contrôle et d'ajustement des paramètres de définition des caractéristiques des composants optiques dans les éléments de réseau (NE11-NE1n) qui génèrent des signaux à transmettre via un réseau de transmission optique avec multiplexage de longueurs d'ondes, ledit procédé comportant les étapes suivantes :
- fournir un nombre d'éléments de réseau (NE11-NE1n) supérieur à 1, côté transmetteur, chaque élément de réseau possédant au moins une interface colorée, chaque interface générant un signal tributaire de longueur d'onde unique à une longueur d'onde prédéfinie différente de celle des autres signaux ;
- à la limite dudit réseau de transmission optique avec multiplexage de longueurs d'ondes, multiplexer lesdits signaux tributaires avec longueur d'onde unique afin de former un signal de transmission de longueur d'onde multiplexé utilisant un multiplexeur de longueur d'onde (MUX) côté transmetteur ;
- transmettre ledit signal de transmission de longueur d'onde multiplexé à travers ledit réseau de transmission avec multiplexage de longueurs d'ondes (WDM) à un démultiplexeur (DMUX) côté récepteur ;
- au niveau dudit démultiplexeur (DMUX), scinder ledit signal de transmission de longueur d'onde multiplexé reçu en ses différents signaux tributaires constitutifs de longueur d'onde unique ;
- transmettre lesdits signaux tributaires constitutifs de longueur d'onde unique à différents éléments de réseau côté récepteur ;
- au niveau desdits éléments de réseau (NE21-NE2n) côté récepteur, mesurer les caractéristiques prédéfinies desdits signaux tributaires de longueur d'onde unique ;
- communiquer les données mesurées (MEAS) à partir des éléments de réseau côté récepteur à un système de contrôle à distance qui contrôle lesdits éléments de réseau côté transmetteur ;
- déterminer au niveau du système de contrôle à distance (NMS1) les paramètres d'ajustement à partir desdites données mesurées en utilisant un algorithme (ALG) prédéfini ;
- communiquer les ajustements (ADJ) aux différents éléments de réseau côté transmetteur (NE11-NE1n) ; et
- régler les transmetteurs (Tx) dans les interfaces colorées desdits éléments de réseau (NE11-NE1n) côté transmetteur conformément auxdits ajustements.

2. Un élément de réseau (NE11-NE1n, NE21-NE2n) pouvant être connecté à un réseau de transmission optique avec multiplexage de longueurs d'ondes (WDM) pour la transmission de signaux tributaires de longueur d'onde unique sous la forme d'un signal de longueur d'onde multiplexé, ledit élément de réseau comprenant :
- au moins un transmetteur (Tx) pour générer un signal tributaire de longueur d'onde unique à une longueur d'onde dédiée (λ1-λn) ;
- au moins un récepteur (Rx) correspondant pour recevoir un signal tributaire inverse de longueur d'onde unique, à la même longueur d'onde ;
- un moyen pour mesurer les caractéristiques prédéfinies desdits signaux tributaires inverses de longueur d'onde unique et pour communiquer les données mesurées (MEAS) à un système de contrôle à distance (NMS1) ;
- et un moyen pour recevoir les ajustements (ADJ) dudit système de contrôle à distance et pour régler ledit transmetteur (Tx) en conséquence, ledit système de contrôle à distance (NMS1) hébergeant un algorithme pour déterminer lesdits paramètres d'ajustement à partir des données mesurées fournies par les éléments de réseau côté récepteur ;
ledit élément de réseau étant un brasseur optique (NE11-NE1n, NE21-NE2n) qui ne forme pas partie dudit réseau de transmission avec multiplexage de longueurs d'ondes (WDM) et pouvant être connecté à un multiplexeur par longueur d'onde (MUX) dudit réseau de transmission avec multiplexage de longueurs d'ondes via des interfaces colorées pour les longueurs d'onde uniques dédiées.

3. Un système de contrôle (NMS1, NMS2) pour les éléments de réseau (NE11-NE1n, NE21-NE2n) générant des signaux tributaires de longueur d'onde unique à des longueurs d'onde dédiées pour la transmission à travers un réseau de transmission optique avec multiplexage de longueurs d'ondes (WDM) sous la forme d'un signal de longueur d'onde multiplexé, ledit système de contrôle comprenant
- un moyen pour recevoir les données mesurées (MEAS) émanant des différents éléments d'un premier réseau (NE11-NE1n, NE21-NE2n) qui effectuent les mesurages des caractéristiques prédéfinies sur des signaux tributaires de longueur d'onde unique reçus ;
- un processeur et son dispositif de stockage associé stockant sous la forme d'un programme logiciel un algorithme (ALG) pour déterminer les paramètres d'ajustement desdites données mesurées ;
- et un moyen pour communiquer lesdits paramètres d'ajustement aux différents éléments d'un deuxième réseau (NE11-NE1n) qui génèrent lesdits signaux tributaires de longueur d'onde unique ;
ledit système de contrôle étant un gestionnaire d'élément (NMS1, NMS2) pour brasseurs optiques (NE11-NE1n, NE21-NE2n) ne formant pas partie dudit réseau de transmission optique avec multiplexage de longueurs d'ondes (WDM).
